# FASCICULE DE BREVET EUROPEEN

(11) **EP 1 626 467 B1**
(45) Date de publication et mention de la délivrance du brevet: **09.04.2008**
(21) Numéro de dépôt: 05291554.3
(22) Date de dépôt: 20.07.2005
(51) Int. Cl.: H01R 31/08

(54) **Peigne multipolaire de répartition horizontale d'une énergie électrique polyphasée et ensemble le comportant**
Multipolarkamm zur horizontalen Verteilung von mehrphasiger elektrischer Energie, sowie dazugehörige Anordnung
Multipolar comb for horizontal distribution of multiphase electrical power and device containing it

(30) Priorité: 21.07.2004 FR 0408079
(43) Date de publication de la demande: 15.02.2006
(73) Titulaire: LEGRAND FRANCE, 87000 Limoges (FR); LEGRAND SNC, 87000 Limoges (FR)
(72) Inventeur: Baudou, Alain, 87000 Limoges (FR); Sanchez, Bertrand, 87800 Saint Priest Ligoure (FR); Re, Marcello, 21040 Venegono Superiore Varese (IT); De Cherubini, Sergio, 21100 Varese (IT); Cottone, Guy, 06370 Mouans Sartoux (FR); Le Goaoc, Francois, 06560 Valbonne (FR)
(74) Mandataire: Santarelli

(56) Documents cités:
- EP-A- 0 716 487
- EP-A- 1 137 034

## Description

L'invention a trait aux peignes multipolaires de répartition horizontale d'une énergie électrique polyphasée et aux appareils électriques sur lesquels de tels peignes peuvent être installés.

On connaît déjà, pour les installations électriques domestiques triphasées, un tel peigne de répartition horizontale, décrit notamment par EP 1 137 034 A, qui comporte une rangée de dents de phase alignées longitudinalement suivant un pas constant, deux dents consécutives de cette rangée étant prévues pour un pôle de phase respectif et appartenant donc à une barre conductrice de phase respective, les dents de ladite rangée qui appartiennent à une même barre conductrice de phase étant disposées suivant un pas qui est de trois fois celui de la rangée de dents de phase.

Les trois premières dents, à partir de la gauche, de la rangée de dents de phase, sont prévues pour être raccordées à un appareil de tête de groupe triphasé, tel qu'un interrupteur différentiel, tandis que les dents suivantes de la rangée de dents de phase sont chacune raccordées à un appareil monophasé ayant la même largeur que le pas de la rangée de dents de phase, ces différents appareils étant au format dit « modulaire », c'est-à-dire ayant une forme globalement parallélépipédique avec deux faces principales et des faces latérales s'étendant de l'une à l'autre des faces principales, dont une face supérieure présentant un orifice donnant accès à une borne de raccordement propre à recevoir une dent de peigne, la largeur de chaque appareil (distance entre ses deux faces principales) étant un multiple d'une valeur normalisée, connue sous le nom de « module », qui est de l'ordre de 18 mm.

L'invention vise à améliorer les conditions d'utilisation d'un tel peigne.

Elle propose à cet effet un peigne multipolaire de répartition horizontale d'une énergie électrique polyphasée, comportant une pluralité de dents de même orientation chacune adaptée à être insérée dans une borne de raccordement d'un appareil électrique, lesdites dents comportant une rangée de dents de phase alignées longitudinalement suivant un pas constant, deux dents consécutives de ladite rangée étant prévues pour un pôle de phase respectif et appartenant donc à une barre conductrice de phase respective, les dents de ladite rangée qui appartiennent à une même barre conductrice étant disposées suivant un pas multiple du pas de ladite rangée ; caractérisé en ce que lesdites dents comportent, en outre de ladite rangée de dents de phase, à une extrémité dudit peigne, un couple de dents de phase d'extrémité présentant entre elles un écart suivant une direction longitudinale qui est plus petit que le pas de ladite rangée de dents de phase alors que chaque dent dudit couple de dents de phase d'extrémité appartient à une respective desdites barres conductrice de phase.

Ainsi, dans le peigne selon l'invention, les dents de phase d'extrémité sont agencées différemment des autres dents de phase, au moins deux des dents de phase d'extrémité étant plus proches l'une de l'autre suivant une direction longitudinale que les autres dents de phase.

L'encombrement suivant la direction longitudinale des dents d'extrémité qui servent à opérer l'alimentation du peigne est ainsi plus petit qu'avec les peignes conventionnels.

Le peigne selon l'invention offre ainsi l'avantage de permettre de constituer des tableaux de distribution plus compacts qu'avec les peignes conventionnels.

Selon des caractéristiques préférées, pour des raisons de simplicité et de commodité, tant à la fabrication qu'à l'utilisation :
- ledit écart suivant une direction longitudinale est de la moitié dudit pas de ladite rangée de dents de phase ; et optionnellement
- ledit pas est compris entre 17,8 et 18 mm ; et/ou
- au moins une dent dudit couple de dents de phase d'extrémité est décalée transversalement par rapport à ladite rangée de dents de phase ; et/ou
- les deux dents dudit couple de dents de phase d'extrémité sont chacune décalées transversalement par rapport à ladite rangée de dents de phase.

Selon d'autres caractéristiques préférées, pour les mêmes raisons :
- lesdites dents comportent, en outre de ladite rangée de dents de phase, à une extrémité dudit peigne, trois dents de phase d'extrémité appartenant chacune à une respective desdites barres conductrices de phase, une première et une deuxième desdites dents de phase d'extrémité formant un dit couple de dents de phase d'extrémité ; et optionnellement
- une troisième desdites dents de phase d'extrémité est alignée avec ladite rangée de dents de phase ; et/ou
- ladite première dent de phase d'extrémité est celle qui est située le plus en avant, ladite deuxième dent de phase d'extrémité étant située en arrière de ladite première dent de phase d'extrémité, la troisième dent de phase d'extrémité étant située en arrière de ladite deuxième dent de phase d'extrémité ; et optionnellement
- chaque dite barre conductrice comporte une longrine en forme de bande continue d'où saillent les dents appartenant à cette barre, avec pour chaque dite barre conductrice ladite dent de phase d'extrémité qui est disposée dans le même plan que ladite longrine ; et/ou
- l'écart suivant une direction transversale entre ladite première dent de phase d'extrémité et ladite deuxième dent de phase d'extrémité est le même que l'écart suivant une direction transversale entre ladite deuxième dent de phase d'extrémité et ladite troisième dent de phase d'extrémité ; et optionnellement
- ledit écart suivant une direction transversale est compris entre 6,7 et 7,1 mm.

Dans un premier mode de réalisation préféré, comme étant particulièrement compact, des caractéristiques qui viennent d'être exposées :
- ladite deuxième dent de phase d'extrémité et une troisième dent de phase d'extrémité forment également un dit couple de dent de phase d'extrémité ; et optionnellement
- ladite première dent de phase d'extrémité et ladite troisième dent de phase d'extrémité sont alignées l'une avec l'autre suivant une direction transversale ; et optionnellement
- ladite deuxième dent de phase d'extrémité est disposée à gauche desdites première dent de phase d'extrémité et troisième dent de phase d'extrémité ; et/ou
- lesdites dents comportent en outre une rangée de dents de neutre, alignées longitudinalement selon le même pas que ladite rangée de dents de phase, ainsi qu'une dent de neutre d'extrémité alignée avec ladite rangée de dents de neutre, appartenant à une même barre conductrice de neutre, distincte desdites barres conductrices de phase, ladite dent de neutre d'extrémité et ladite deuxième dent de phase d'extrémité étant alignées suivant une direction transversale.

Dans un deuxième mode de réalisation préféré des caractéristiques qui viennent d'être exposées, offrant l'avantage de permettre l'utilisation de borne à vis :
- ladite deuxième dent de phase d'extrémité et une troisième dent de phase d'extrémité présentent entre elles un écart suivant une direction longitudinale qui est plus grand que le pas de ladite rangée de dents de phase ; et optionnellement
- ladite deuxième dent de phase d'extrémité est disposée à gauche de ladite première dent de phase d'extrémité tandis que ladite troisième dent de phase d'extrémité est disposée à droite de ladite première dent de phase d'extrémité ; et optionnellement
- lesdites dents comportent en outre une rangée de dents de neutre, alignées longitudinalement selon le même pas que ladite rangée de dents de phase, ainsi qu'une dent de phase d'extrémité alignée avec ladite rangée de dents de neutre appartenant à une même barre conductrice de neutre distincte desdites barres conductrices de phase, ladite dent de neutre d'extrémité étant située à gauche de ladite troisième dent de phase d'extrémité et à droite de la première dent de phase d'extrémité.

Selon d'autres caractéristiques préférées, pour les mêmes raisons, ledit peigne comporte une enveloppe en matière isolante renfermant lesdites barres conductrice, à l'exception desdites dents, qui saillent d'une surface inférieure de ladite enveloppe ; et optionnellement
- ladite face inférieure de ladite enveloppe est plate et présente au moins un renfoncement débouchant sur une face avant de ladite enveloppe, chaque dit renfoncement ayant un contour globalement parallélépipédique adapté à accueillir une lame plate de tournevis.

L'invention vise également, sous un deuxième aspect, un ensemble comportant un peigne tel qu'exposé ci-dessus et un appareil électrique comportant une face présentant un couple d'orifices de phase donnant chacun accès à une borne de raccordement d'un pôle de phase respectif et étant chacun adapté à recevoir une dent respective dudit couple de dents de phase d'extrémité dudit peigne disposé suivant une direction droite-gauche dudit appareil, lesdits orifices dudit couple d'orifices de phase ayant donc entre eux un écart suivant une direction droite-gauche qui est plus petit que ledit pas de la rangée de dents de phase dudit peigne.

Selon des caractéristiques préférées dudit ensemble, pour des raisons de simplicité et de commodité tant à la fabrication qu'à l'utilisation :
- ledit appareil électrique comporte un corps au format modulaire et une semelle s'allongeant suivant une direction gauche-droite, saillant dudit corps au-delà d'une face principale de celui-ci et saillant légèrement vers le bas au-delà d'une face inférieure dudit corps, ladite semelle présentant des dents saillant verticalement au-dessus d'une face supérieure de ladite semelle; et optionnellement
- lesdites dents sont alignées longitudinalement suivant le même pas que celui de ladite rangée de dents de phase dudit peigne ; et optionnellement
- ladite semelle présente une longueur suivant une direction gauche-droite égale à quatre fois ledit pas de ladite rangée de dents de phase ; et/ou
- ladite face dudit appareil présentant un couple d'orifices de phase est la face supérieure dudit corps ; et optionnellement
- ladite face supérieure dudit corps présente autant d'orifices donnant accès à une borne de raccordement, que de dents saillant de ladite semelle, chaque dite dent étant raccordée électriquement à une respective desdites bornes par des conducteurs électriques internes audit appareil ; et optionnellement
- lesdites bornes de raccordement auxquelles donnent accès lesdits orifices sont des bornes à insertion ; et optionnellement
- ledit appareil est un simple adaptateur de raccordement par peigne, la largeur suivant une direction gauche-droite dudit corps étant égale au pas de ladite rangée de dents de phase ; et alternativement
- ledit appareil renferme un interrupteur différentiel triphasé, la largeur suivant une direction gauche-droite dudit corps étant égale à trois fois ou bien à quatre fois le pas de ladite rangée de dents de phase ; et alternativement
- lesdites bornes de raccordement auxquelles donnent accès lesdits orifices sont des bornes à vis ; et optionnellement
- ledit appareil est un simple adaptateur de raccordement par peigne, la largeur suivant une direction gauche-droite dudit corps étant égale à deux fois le pas de ladite rangée de dents de phase.

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en perspective d'un ensemble formé par un interrupteur différentiel modulaire tétrapolaire, par un adaptateur modulaire de raccordement par peigne, par plusieurs disjoncteurs modulaires et par un peigne tétrapolaire de répartition horizontale, l'adaptateur et le peigne étant conformes à l'invention ;
- la figure 2 est une vue en perspective montrant isolément l'adaptateur de raccordement faisant partie de l'ensemble illustré sur la figure 1 ;
- la figure 3 est une vue en perspective montrant isolément le peigne faisant partie de l'ensemble illustré sur la figure 1, dans une position où ce peigne est basculé d'un quart de tour afin que ses dents soient en avant plutôt qu'en bas ;
- la figure 4 est une vue de profil de ce peigne, prise depuis le côté situé à gauche sur la figure 3 ;
- la figure 5 est une vue en perspective montrant isolément les barres conductrices que comporte ce peigne pour les pôles de phase respectifs ;
- les figures 6 et 7 sont respectivement une vue de dessous et une vue latérale de ce peigne ;
- la figure 8 est une vue en perspective de l'adaptateur de raccordement, la joue de gauche de son corps et le couvercle de sa semelle étant enlevés afin de montrer sa constitution interne ;
- la figure 9 est une vue en perspective d'une des bornes à insertion que comporte cet adaptateur ;
- la figure 10 est une vue en perspective d'un appareil servant à la fois d'adaptateur de raccordement par peigne et de déclencheur différentiel, destiné à coopérer avec un disjoncteur tétrapolaire d'une façon similaire à celle dont l'adaptateur de i'ensembie illustré sur la figure 1 coopère avec l'interrupteur différentiel de cet ensemble ;
- la figure 11 est une vue similaire à la figure 2, mais pour une variante de l'adaptateur dont le corps est muni de bornes à vis ;
- la figure 12 est une vue similaire à la figure 1 si ce n'est que ensemble illustré comporte l'adaptateur illustré sur la figure 11 et comporte un peigne adapté à coopérer avec cet adaptateur ;
- la figure 13 est une vue semblable à la figure 3, mais pour le peigne de l'ensemble illustré sur la figure 12 ;
- la figure 14 est une vue semblable à la figure 12, mais pour un ensemble où le peigne tétrapolaire est remplacé par un peigne unipolaire, pour le pôle de neutre, et par un peigne tripolaire, pour les pôles de phase ; et
- la figure 15 est une vue semblable à la figure 13, mais montrant les deux peignes faisant partie de l'ensemble illustré sur la figure 14.

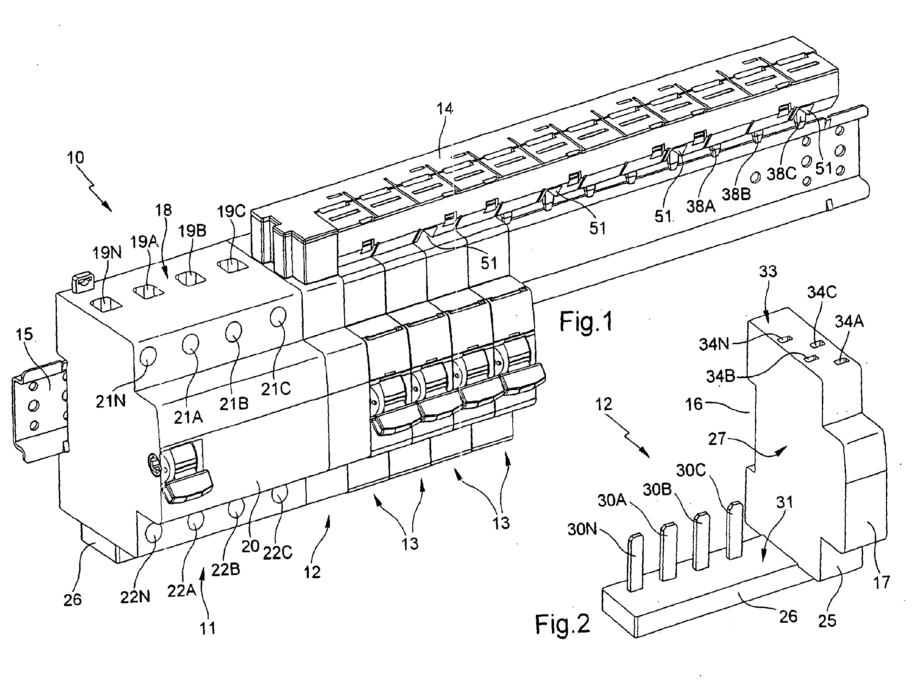

L'ensemble 10 illustré sur la figure 1 comporte un interrupteur différentiel 11 en tant qu'appareil de tête de groupe, un adaptateur 12 de raccordement par peigne, douze disjoncteur 13, dont seuls les quatre plus proches de l'adaptateur 12 ont été représentés pour ne pas surcharger le dessin, un peigne tétrapolaire 14 et un rail de support 15.

L'interrupteur 11, le corps 25 (figure 2) de l'adaptateur 12 et les disjoncteurs 13 sont du type modulaire: ils présentent une forme globalement parallélépipède avec deux faces principales orientées verticalement et des faces latérales s'étendant de l'une à l'autre des faces principales, la largeur de ces appareils, soit l'écart entre leurs deux faces principales étant égale à une ou plusieurs fois une largeur de base normalisée, connue sous le nom « module », qui est de l'ordre de 18 mm.

La face latérale arrière de chacun des appareils 11, 12 et 13 présente une échancrure telle que l'échancrure 16 (figure 2) de l'adaptateur 12, servant au montage de l'appareil sur le rail 15, lequel est à profil normalisé en Ω.

La face latérale avant de chacun des appareils 11, 12 et 13 présente, en position centrale, sur à peu près la moitié de sa longueur, un nez saillant tel que le nez 17 (figure 2) de l'adaptateur 12.

Comme on le verra plus en détails ci-après, la face supérieure de chacun des appareils 11, 12 et 13 présente des orifices donnant chacun accès à une borne de raccordement, la face latérale inférieure de l'interrupteur 11 et celle des disjoncteurs 13 étant également munie de tels orifices.

On va maintenant décrire plus en détails l'interrupteur 11 et l'adaptateur 12.

L'interrupteur 11 comporte une face supérieure 18 présentant quatre orifices 19N, 19A, 19B et 19C donnant chacun accès à une borne à vis constituant une borne d'entrée respectivement pour le pôle neutre, pour le pôle de première phase, pour le pôle de deuxième phase et pour le pôle de troisième phase.

La face avant de l'interrupteur 11 présente au-dessus du nez 20 quatre orifices 21N, 21A, 21B et 21C permettant chacun d'accéder à la vis de serrage des bornes auxquelles donnent respectivement accès les orifices 19N, 19A, 19B et 19C.

La face inférieure de l'interrupteur 11 présente quatre orifices, non visibles sur les dessins, chacun aligné avec un respectif des orifices 19N, 19A, 19B et 19C et semblables à ces derniers.

Les orifices que présente la face inférieure de l'interrupteur 11 donnent chacun accès à une borne de sortie de l'interrupteur 11, qui est une borne à vis.

La face avant de l'interrupteur 11 présente, sous le nez 20, quatre orifices 22N, 22A, 22B et 22C donnant chacun accès à la vis de serrage d'une des bornes de sortie, respectivement pour le pôle de neutre, pour le pôle de première phase, pour le pôle de deuxième phase et pour le pôle de troisième phase.

Comme on le voit plus particulièrement sur la figure 2, l'adaptateur 12 comporte un corps 25, qui est au format modulaire, et une semelle 26 s'allongeant suivant une direction gauche-droite, saillant du corps 25 vers la gauche au-delà de la face principale 27 de gauche du corps 25 sur une distance correspondant à la largeur de l'interrupteur 11 et saillant légèrement vers le bas au-delà de la face inférieure du corps 25.

La largeur du corps 25 est de l'ordre de 18 mm (un module) et la largeur de l'interrupteur 11, et donc de la semelle 26, est de l'ordre 72 mm (quatre modules).

La semelle 26 présente quatre dents 30N, 30A, 30B et 30C saillant verticalement au-dessus de la face supérieure 31 de la semelle 26.

Les dents 30N, 30A, 30B et 30C sont alignées longitudinalement suivant un pas (entraxe entre deux dents successives) constant, qui est ici de l'ordre de 18 mm (un module).

La disposition des dents 30N, 30A, 30B et 30C par rapport à la face principale 27 correspond à la disposition relative des orifices de la face inférieure de l'interrupteur 11 par rapport à la face principale de droite de celui-ci, de sorte que l'adaptateur 12 peut être disposé vis-à-vis de l'interrupteur 11 dans une position où les dents 30N, 30A, 30B et 30C sont chacune en place dans une respective des bornes de sortie de l'interrupteur 11 avec la face supérieure 31 de la semelle 26 qui est contre la face inférieure de l'interrupteur 11 et la face principale de gauche 27 du corps 25 qui est contre la face principale de droite de l'interrupteur 11. L'adaptateur 12 et l'interrupteur 11 sont ainsi disposés dans la configuration illustrée sur la figure 1.

Bien entendu, pour assurer un bon contact électrique entre chaque borne de sortie de l'interrupteur 11 et la dent correspondante de l'adaptateur 12, la vis de chaque borne de sortie est serrée grâce à un tournevis accédant à cette borne à vis par l'un des orifices 22N, 22A, 22B et 22C.

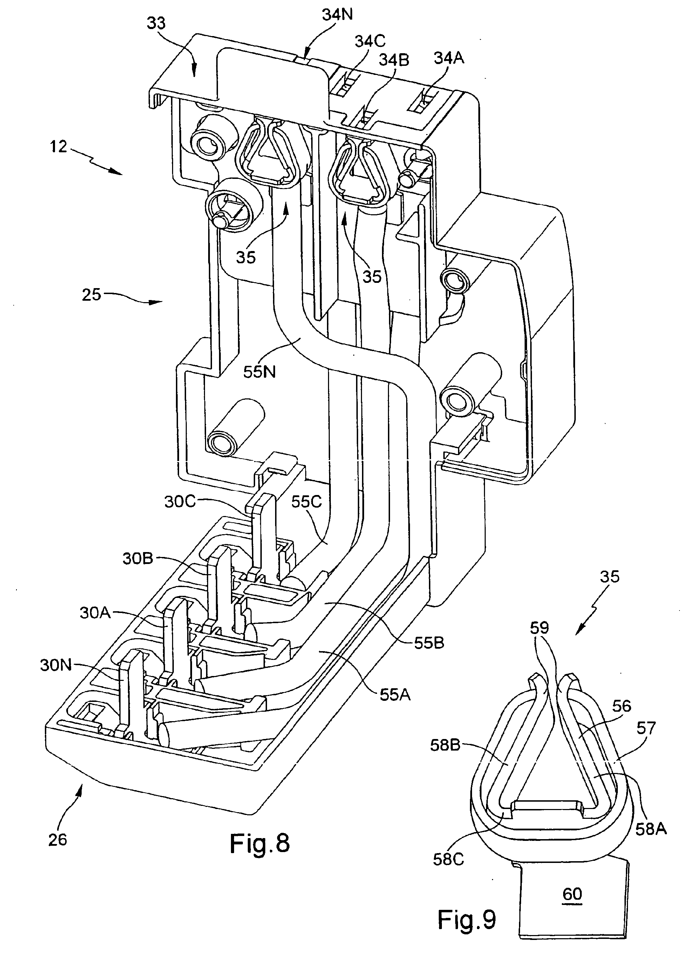

La face supérieure 33 du corps 25 présente quatre orifices 34A, 34B, 34C et 34N donnant chacun accès à une borne à insertion 35 (figures 8 et 9) chacune prévue pour recevoir l'une des dents d'un peigne de répartition horizontale, ici l'une des quatre dents d'extrémité de gauche du peigne 14.

Comme on le verra ultérieurement à l'appui de la figure 8, la dent 30N est reliée électriquement à la borne à insertion à laquelle donne accès l'orifice 34N, la borne 30A est reliée électriquement à la borne à insertion à laquelle donne accès l'orifice 34A, la dent 30B est reliée électriquement à la borne à insertion à laquelle donne accès l'orifice 34B et la dent 30C est reliée électriquement à la borne à insertion à laquelle donne accès l'orifice 34C.

Ainsi, lorsque l'adaptateur 12 coopère avec l'interrupteur 11 comme montré sur la figure 1, les bornes à insertion auxquelles donnent accès les orifices 34N, 34A, 34B et 34C sont reliées respectivement à la borne de sortie pour le pôle de neutre, à la borne de sortie pour ie pôie de première phase, à ia borne de sortie pour le pôle de deuxième phase et à la borne de sortie pour le pôle de troisième phase de l'interrupteur 11.

Sur la face 33, les orifices 34N et 34B sont situés du côté gauche et sont alignés l'un avec l'autre suivant une direction avant-arrière.

Les orifices 34C et 34A sont situés du côté droit et sont alignés l'un avec l'autre suivant une direction avant-arrière.

L'écart entre les orifices 34N et 34C suivant une direction droite-gauche est de l'ordre de 9 mm (un demi module).

Du fait que l'orifice 34N et l'orifice 34B sont alignés l'un avec l'autre suivant une direction avant-arrière et que les orifices 34C et 34A sont alignés l'un avec l'autre d'une façon similaire, l'écart suivant une direction gauche-droite est également de l'ordre de 9 mm (un demi module) entre l'orifice 34N et l'orifice 34A, entre l'orifice 34B et l'orifice 34C ainsi qu'entre l'orifice 34B et l'orifice 34A.

L'orifice 34N est celui qui est le plus en arrière. Il est prévu pour être écarté du rail 15 suivant une direction avant-arrière d'une distance de l'ordre de 13 mm.

L'orifice 34C est disposé en avant de l'orifice 34N et en arrière de l'orifice 34B. L'écart suivant une direction avant-arrière entre l'orifice 34C et l'orifice 34N est de l'ordre de 9,2 mm tandis que l'écart entre l'orifice 34C et l'orifice 34B suivant une direction avant-arrière est de l'ordre de 6,9 mm.

L'orifice 34A est celui qui est situé le plus en avant. L'écart suivant une direction avant-arrière entre l'orifice 34A et l'orifice 34B est de l'ordre de 6,9 mm.

Chacun des disjoncteurs 13 est bipolaire monophasé. Il comporte une face supérieure munie de deux orifices disposés de la même façon que les orifices 34N et 34C, donnant respectivement accès à une borne d'entrée de neutre et à une borne d'entrée de phase.

Ainsi, l'orifice donnant accès à une borne d'entrée de neutre est celui qui est plus en arrière. Il est prévu pour être écarté du rail 15 suivant une direction avant-arrière d'une distance de l'ordre de 13 mm. L'orifice donnant accès à une borne d'entrée de phase est disposé en avant de l'autre orifice, l'écart suivant une direction avant-arrière entre les deux orifices étant de l'ordre de 9,2 mm tandis que l'écart suivant la direction gauche-droite est de l'ordre de 9 mm (un demi module).

La face inférieure de chaque disjoncteur 13 présente deux orifices d'insertion (non visibles sur les dessins) donnant chacun accès à une borne de sortie à connexion rapide comportant un ressort en σ et un levier de commande de cette borne présentant une touche (non visible).

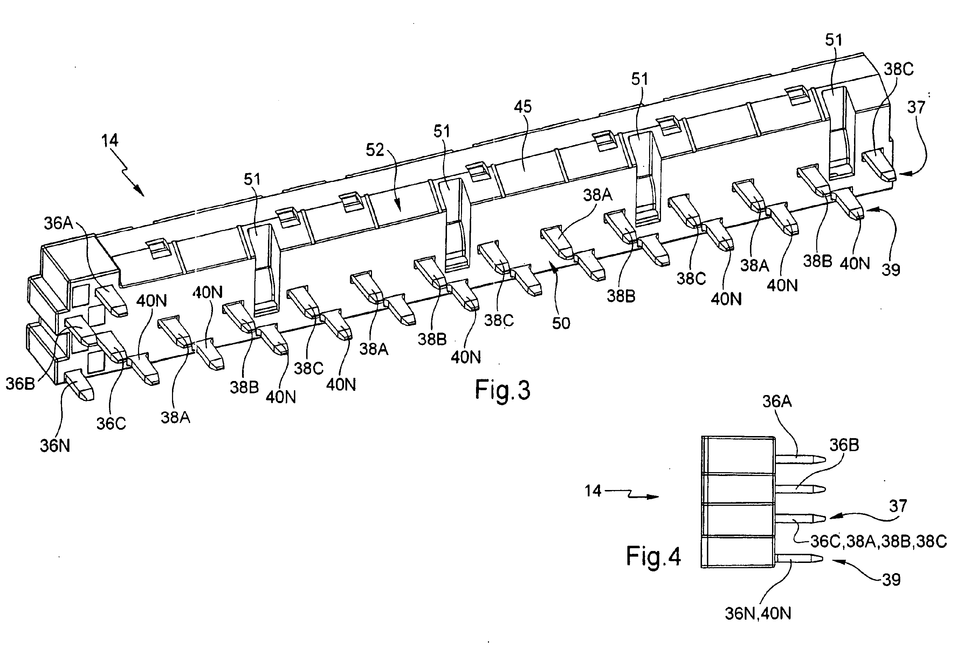

On va maintenant décrire plus en détails le peigne tétrapolaire 14 à l'appui des figures 3 à 7.

Comme indiqué ci-dessus, les quatre dents d'extrémité de gauche 36N, 36A, 36B et 36C du peigne 14 sont prévues pour être reçues respectivement dans la borne à insertion 35 à laquelle donne accès l'orifice 34N, dans la borne 35 à laquelle donne accès l'orifice 34A, dans la borne 35 à laquelle donne accès l'orifice 34B et dans la borne 35 à laquelle donne accès l'orifice 34C.

La disposition relative des dents 36N, 36A, 36B et 36C est donc semblable à la disposition relative des orifices 34N, 34A, 34B et 34C.

Ainsi, les dents 36N et 36B sont les dents les plus à gauche et elles sont alignées l'une avec l'autre suivant une direction transversale.

Les dents 36A et 36C sont situées à droite des dents 36N et 36B et sont alignées l'une avec l'autre suivant une direction transversale.

L'écart suivant une direction longitudinale entre les dents 36N et 36C, 36N et 36A, 36B et 36C ainsi que 36B et 36A est de l'ordre de 9 mm (un demi module).

La dent 36N est celle qui est le plus en arrière.

La dent 36C est disposée en avant de la dent 36N et en arrière de la dent 36B. L'écart suivant une direction transversale entre la dent 36C et la dent 36N est de l'ordre de 9,2 mm tandis que l'écart entre la dent 36C et la dent 36B suivant une direction transversale est de l'ordre de 6,9 mm.

La dent 36A est celle qui est située le plus en avant. L'écart suivant une direction transversale entre la dent 36A et la dent 36B est de l'ordre de 6,9 mm.

En outre des quatre dents extrêmes 36N, 36A, 36B et 36C, le peigne 14 comporte une rangée 37 de douze dents de phase 38A, 38B et 38C alignées longitudinalement et une rangée 39 de dents de neutre 40N alignées longitudinalement.

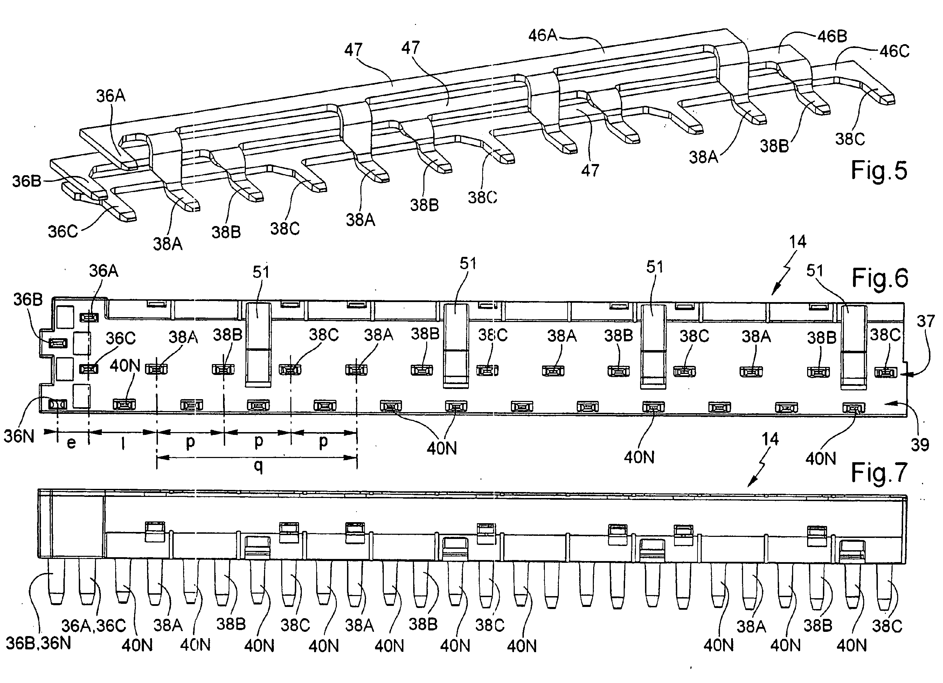

Les dents 38A, 38B et 38C de la rangée 37 sont alignées suivant un pas (entraxe entre deux dents consécutives) p (figure 6) constant de l'ordre de 18 mm (un module).

La dent 36C est alignée avec la rangée 37 et l'écart I suivant une direction longitudinale entre la dent 36C et la dent 38A la plus proche de la rangée 37 est égal au pas p de la rangée 37 (un module).

Les dents 40N de la rangée 39 sont elles aussi alignées suivant le même pas (un module), avec l'écart entre la dent 36N et la dent 40N de la rangée 39 la plus proche qui est égale à ce pas (un module).

L'écart suivant une direction longitudinale entre chaque dent 40N de la rangée 39 et la dent immédiatement voisine de la rangée 37, qui est donc le même que l'écart suivant une direction longitudinale entre les dents 36N et 36C, est de l'ordre de 9 mm (un demi module).

Le peigne tétrapolaire 14 comporte une enveloppe 45 en matière plastique isolante renfermant quatre barres en matière métallique conductrice.

La figure 5 montre les barres conductrices 46A, 46B et 46C auxquelles appartiennent respectivement les dents 36A et 38A, les dents 36B et 38B ainsi que les dents 36C et 38C.

Chacune des barres 46A, 46B et 46C comporte une longrine 47 qui a la forme d'une bande plate continue, d'où saillent les dents susmentionnées.

Pour chacune des barres 46A, 46B et 46C, la dent d'extrémité de gauche, respectivement 36A, 36B et 36C, est disposée dans le même plan que la longrine 47.

Les dents restantes 38C de la barre 46C sont également disposées dans le même plan que la longrine 47.

En revanche, pour permettre l'alignement de la rangée 37 de dents de phase, les dents 38B de la barre 46B et les dents 38A de la barre 46A sont décalées transversalement en direction de la barre 46C par rapport à la longrine 47.

Le pas q (figure 6) des dents des barres 46A, 46B et 46C appartenant à la rangée 37 (dents 38A pour la barre 46A, 38B pour la barre 46B et 38C pour la barre 46C) est le triple du pas p de la rangée 37.

La dent 36C est écartée de la dent 38C la plus proche de la même distance que le pas q (trois modules). En revanche, la dent 36A est écartée de la dent 38A la plus proche d'une distance plus petite (un seul module) et de même la distance entre la dent extrême 36B et la dent 38B la plus proche est plus petite que le pas des dents 38B (cette distance est de deux modules et demi).

La barre conductrice à laquelle appartiennent la dent 36N et les dents 40N est semblable à la barre 46C, c'est-à-dire que sa longrine et ses dents sont coplanaires, mais ses dents sont disposées suivant un pas identique à p (un module).

Du fait que les deux orifices d'accès ménagés dans la face supérieure des disjoncteurs 13 sont disposés comme les orifices 34N et 34C, les bornes d'entrée du disjoncteur 13 qui est le plus proche de l'adaptateur 12 peuvent recevoir la dent 40N la plus proche de la dent 36N et la dent 38A la plus proche de la dent 36C, le disjoncteur qui suit peut recevoir la dent 40N suivante et la dent 38B suivante, le disjoncteur qui suit encore peut recevoir la dent 40N qui suit encore et la dent 38C suivante, et ainsi de suite, chaque disjoncteur recevant une des dents 40N de la rangée 39 de dents de neutre et l'une des dents 38A, 38B ou 38C de la rangée 37 de dents de phase.

Ainsi, le disjoncteur le plus proche de l'adaptateur 12 est relié au pôle de neutre et au pôle de première phase, le disjoncteur 13 qui suit est relié au pôle de neutre et au pôle de deuxième phase, le disjoncteur qui suit encore est relié au pôle de neutre et au pôle de troisième phase, le disjoncteur qui suit encore après est relié au pôle de neutre et au pôle de première phase, et ainsi de suite.

On observera que si, au lieu du peigne 14, on avait employé un peigne tétrapolaire conventionnel où toutes les dents de phase appartiennent à une rangée de dents alignées au pas d'un module et toutes les dents de neutre appartiennent à une rangée de dents alignées au pas d'un module, le corps 25 de l'adaptateur 12 aurait dû être trois fois plus large (largeur de trois modules).

Comme on le voit plus particulièrement sur la figure 3, la face inférieure 50 de l'enveloppe 45 est plate et présente à intervalle régulier des renfoncements 51 débouchant sur la face avant 52 de l'enveloppe 45.

Les renfoncements 51 ont un contour globalement parallélépipédique avec une largeur d'environ 5,5 mm. Ils sont prévus pour accueillir la lame plate d'un tournevis qui est ensuite basculée en prenant appui sur la face supérieure des appareils tels que les disjoncteurs 13 afin d'extraire ie peigne 14 hors de ces appareils et hors de l'adaptateur 12.

On va maintenant décrire l'agencement interne de l'adaptateur 12 à l'appui des figures 8 et 9.

Le corps 25 et la semelle 26 logent des conducteurs isolés 55N, 55A, 55B et 55C dont une extrémité est connectée respectivement à la dent 30N, à la dent 30A, à la dent 30B et à la dent 30C, et dont l'autre extrémité est connectée à la borne 35 à laquelle donne accès l'orifice 34N, à la borne 35 à laquelle donne accès l'orifice 34A, à la borne 35 à laquelle donne accès l'orifice 34B et à la borne 35 à laquelle donne accès l'orifice 34C.

A chaque extrémité des câbles 55N, 55A, 55B et 55C la connexion se fait par soudure d'une portion dénudée du conducteur, cette portion dénudée et cette soudure n'étant pas illustrées pour ne pas compliquer le dessin.

Les bornes 35 sont toutes identiques.

On va maintenant décrire l'une d'entre elles à l'appui de la figure 9.

Chaque borne 35 comporte une pince 56, un ressort 57 et un pavé de montage et de raccordement 60.

La pince 56 est en matériau métallique bon conducteur de l'électricité, ici en cuivré étamé.

Elle est en forme générale de lyre. Elle présente deux tronçons latéraux 58A et 58B se raccordant chacun par une extrémité à une extrémité respective d'un tronçon intermédiaire 58C globalement rectiligne. Les tronçons 58A et 58B sont symétriques, c'est-à-dire que l'un est l'image miroir de l'autre.

A partir de leur extrémité opposée au tronçon intermédiaire 58C, c'est-à-dire à partir de leur extrémité distale, les tronçons 58A et 58B se rapprochent l'un de l'autre jusqu'à une zone d'inflexion 59 où ils sont les plus proches l'un de l'autre. Entre la zone d'inflexion 59 et le tronçon intermédiaire 58C, les tronçons 58A et 58B s'écartent l'un de l'autre, chaque tronçon ayant dans cette partie une conformation qui est ici relativement rectiligne.

Le ressort 57 est en matériau métallique présentant une bonne élasticité, ici en acier à ressort. Il a une forme générale en C.

Il entoure étroitement la portion de la pince 56 comportant le tronçon intermédiaire 58C et la partie de chacun des tronçons 58A et 58B située entre le tronçon 58C et ies zones d'inflexion 59, ies extrémités du ressort 57 portant chacune contre la face externe de l'un des tronçons 58A et 58B au niveau de la zone d'inflexion 59. Le pavé 60 est ici fait d'une seule pièce avec la pince 56, à laquelle il se raccorde par la tranche du tronçon intermédiaire 58C située à l'arrière sur la figure 9, au niveau d'un décrochement en léger débord identique à celui qu'on voit à l'avant sur la figure 9.

Le pavé 60 est plat et s'étend selon un plan parallèle à celui suivant lequel sont globalement orientés la pince 56 et le ressort 57. Le pavé 60 est disposé, par rapport au tronçon intermédiaire 58C, du côté opposé à celui où se trouvent les tronçons 58A et 58B, c'est-à-dire qu'il est disposé du côté que l'on voit en bas.

Le pavé 60 permet d'opérer la fixation mécanique de la borne 35 dans l'adaptateur 12 et le raccordement électrique de la borne 35 avec l'un des conducteurs 55N, 55A, 55B et 55C.

Chaque borne 35 est disposée dans l'adaptateur 12 parallèlement à sa face principale 27 (figure 2), et donc à son autre face principale, avec les extrémités distales des tronçons 58A et 58B qui sont situées à proximité de la face 33, l'espace entre les tronçons 58A et 58B étant aligné avec un respectif des orifices 34N, 34A, 34B et 34C.

Chaque borne 35 est prévue pour recevoir l'une des dents 36A, 36B, 36C et 36N du peigne 14, par simple insertion dans la pince 56, avec bien entendu l'insertion qui se fait du côté de l'extrémité distale des tronçons 58A et 58B et le peigne 14 qui est orientée transversalement à la borne 35, c'est-à-dire suivant une direction gauche-droite.

La conformation de la borne 35 et des dents 36A, 36B, 36C et 36N est telle qu'après insertion la dent reçue dans la borne est fortement enserrée par la pince 56 au niveau des zones d'inflexion 59, de sorte qu'il s'établit un bon contact électrique.

Dans chaque disjoncteur 13, la borne d'entrée de neutre et la borne d'entrée de phase est également réalisée par une borne 35, avec chaque borne d'entrée de neutre qui reçoit une dent 40N du peigne 14 et avec chaque borne d'entrée de phase qui reçoit une dent 38A, 38B ou 38C du peigne 14.

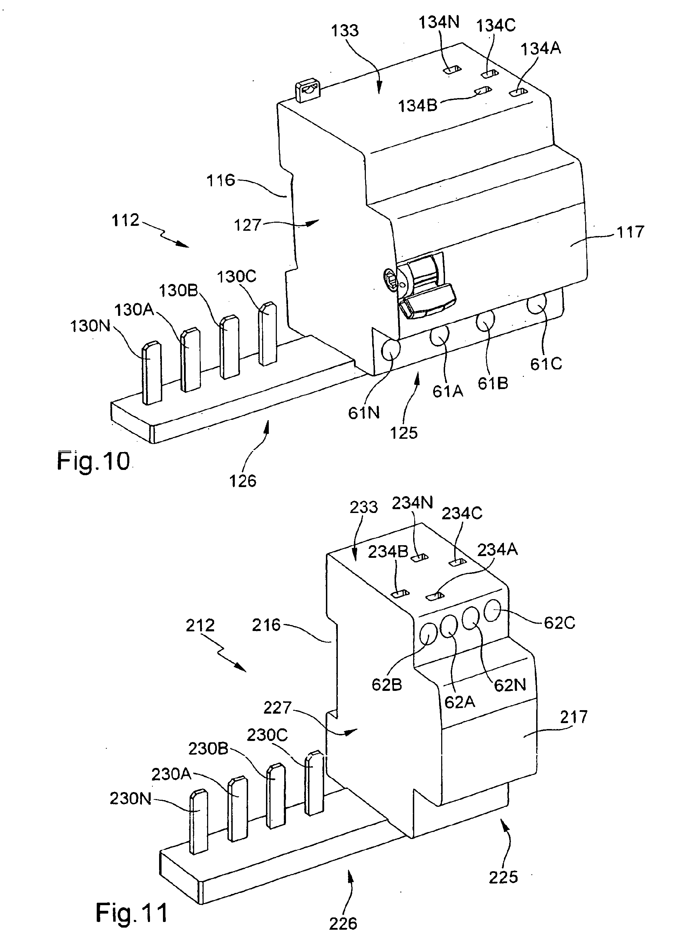

L'appareil 112 illustré sur la figure 10 sert à la fois de déclencheur différentiel pour un disjoncteur de tête de groupe auquel il est prévu d'être accolé, et, comme l'appareil 12, d'adaptateur de raccordement par peigne.

D'une façon générale, on a employé pour l'appareil 112 les mêmes références numériques que pour l'adaptateur 12, mais augmentées du chiffre 100.

La semelle 126 de l'appareil 112 est identique à la semelle 26 de l'adaptateur 12 et disposée vis-à-vis de la face inférieure et de la face principale de gauche 127 du corps 125 de la même façon que la semelle 26 est disposée par rapport à la face inférieure et par rapport à la face principale 27 de l'adaptateur 12.

Le corps 125 de l'appareil 112 est identique à l'appareil 11, si ce n'est que :
- il ne comporte pas de bornes à vis auxquelles on accède par des orifices ménagés dans la face supérieure 133, les bornes d'entrée de l'appareil 112 étant constituées par les dents 130N, 130A, 130B et 130C de la semelle 126 ; et
- que ses bornes de sortie sont non seulement constituées par des bornes à vis auxquelles on accède par des orifices semblables aux orifices 19N, 19A, 19B et 19C ménagés dans la face inférieure du corps 125, avec la vis de ces bornes de sortie qui est accessible par un respectif des orifices 61 N, 61A, 61B et 61 C ménagés dans la face avant en dessous du nez 117, mais aussi des bornes à insertion 35 auxquelles donnent accès des orifices 134N, 134A, 134B et 134C ménagés dans la face supérieure 133 du corps 125, disposés vis-à-vis de la face principale de droite du corps 125 et vis-à-vis de l'échancrure 116 de la même façon que les orifices 34N, 34A, 34B et 34C sont disposés vis-à-vis de la face principale de droite et vis-à-vis de l'échancrure 16 de l'adaptateur 12.

L'appareil 112 est prévu pour coopérer avec un disjoncteur tétrapolaire agencé comme l'interrupteur 11, de la même façon que l'adaptateur 12 coopère avec l'interrupteur 11, si ce n'est qu'un raccordement mécanique est opéré de façon bien connue au niveau de la portion de la face 127 appartenant au nez 117 pour que le déclencheur prévu dans le corps 125 puisse commander l'ouverture des contacts du disjoncteur tétrapolaire, l'ensemble constitué par le disjoncteur tétrapolaire et par l'appareil 112 formant donc un disjoncteur différentiel tétrapolaire auquel d'autres appareils modulaires, tels que les disjoncteur individuels 13, peuvent être raccordés par un peigne 14 dont les dents d'extrémité 36N, 36A, 36B et 36C sont engagées dans les bornes à insertion auxquelles donnent accès les orifices 134N, 134A, 134B et 134C et/ou des appareils raccordés par des conducteurs engagés dans les bornes à vis auxquelles donnent accès les orifices ménagés dans face inférieure du corps 125.

Dans une variante non illustrée de l'appareil 112, le corps 125 est remplacé par un corps ayant une largeur de trois modules (et non de quatre modules).

L'adaptateur 212 illustré sur la figure 11 est identique à l'adaptateur 12, si ce n'est que son corps 225 est deux fois plus large (largeur de deux modules), les bornes de sortie dont il est muni en haut n'étant pas des bornes à insertion mais des bornes à vis.

D'une façon générale, on a employé les mêmes références numériques que pour l'adaptateur 12, mais augmentées du chiffre 200.

La semelle 226 est identique à la semelle 26 de l'adaptateur 12 et disposée vis-à-vis de la face inférieure et de la face principale de gauche 227 du corps 225 de la même façon que la semelle 26 est disposée par rapport à la face inférieure et par rapport à la face principale 27 de l'adaptateur 12.

Les orifices 234A et 234B ménagés dans la face supérieure 233 du corps 225 sont disposés vis-à-vis de la face principale de gauche 227 et vis-à-vis de l'échancrure 216 de la même façon que les orifices 34A et 34B sont disposés vis-à-vis de la face principale de droite 27 et de l'échancrure 16 de l'adaptateur 12 tandis que les orifices 234C et 234N sont disposés vis-à-vis de la face principale de droite et vis-à-vis de l'échancrure 216 de l'appareil 212 de la même façon que les orifices 34C et 34N le sont vis-à-vis de la face principale de droite et de l'échancrure 16 de l'adaptateur 12.

L'écart entre la face principale de gauche 227 et la face principale de droite du corps 225 étant le double de l'écart entre les faces principales de l'adaptateur 12, les orifices 234A et 234C ne sont pas alignés suivant une direction avant-arrière, mais présentent entre eux un écart suivant la direction droite-gauche qui est d'un module.

Ce qui vient d'être dit pour les orifices 234A et 234C vaut également pour les orifices 234B et 234N.

Ainsi, l'on trouve successivement, de la gauche vers la droite, les orifices 234B, 234A, 234N et 234C, l'écart entre deux orifices consécutifs selon une direction gauche-droite étant d'un demi module.

L'orifice 234N est celui qui le plus en arrière. Il est prévu pour être écarté du rail 15 suivant une direction avant-arrière d'une distance de l'ordre de 13 mm.

L'orifice 234C est disposé en avant de l'orifice 234N et en arrière de l'orifice 234B. L'écart suivant une direction avant-arrière entre l'orifice 234C et l'orifice 234N est de l'ordre de 9,2 mm tandis que l'écart entre l'orifice 234C et l'orifice 234B suivant une direction avant-arrière est de l'ordre de 6,9 mm.

L'orifice 234A est celui qui est situé le plus en avant. L'écart suivant une direction avant-arrière entre l'orifice 234A et l'orifice 234B est l'ordre de 6,9 mm.

On notera que le fait que les orifices 34A et 34C (respectivement 34B et 34N) et donc les bornes auxquelles ces orifices donnent accès, soient alignées suivant une direction avant-arrière ne permet pas de remplacer les bornes à insertion 35 par des bornes vis, la borne à vis à laquelle donnerait accès l'orifice 34A (respectivement 34B) empêchant d'accéder par l'avant à la vis de la borne à laquelle donnerait accès la borne 34C (respectivement 34N).

En revanche, le fait que les bornes 234A, 234B, 234C et 234N soient décalées les unes par rapport aux autres suivant une direction gauche-droite permet l'emploi de bornes à vis.

Les orifices 62A, 62B, 62C et 62N disposés sur la face avant du corps 225 au dessus du nez 217 permettent de manoeuvrer la vis de la borne à laquelle donne accès respectivement l'orifice 234A, l'orifice 234B, l'orifice 234C et l'orifice 234N.

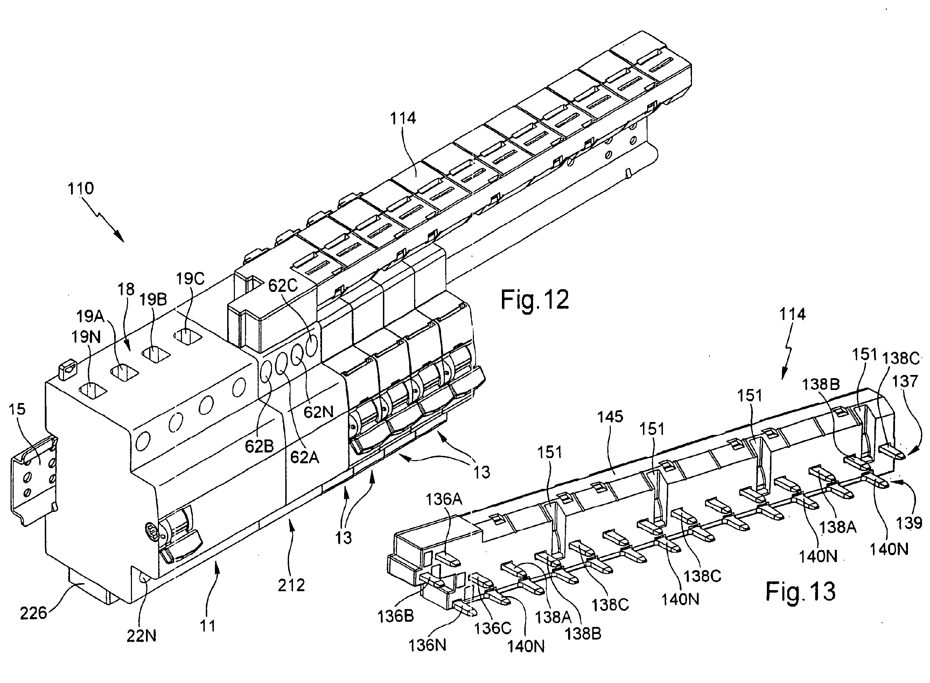

L'ensemble 110 illustré sur la figure 12 est identique à l'ensemble 10, si ce n'est que l'adaptateur 12 est remplacé par l'adaptateur 212 et que le peigne 14 est remplacé par un peigne 114 dont les quatre dents extrêmes de gauche sont adaptées à être insérées dans les orifices 234A, 234B, 234C et 234N.

D'une façon générale, on a utilisé pour le peigne 114 les mêmes références numériques que pour le peigne 14, mais augmentées du chiffe 100.

La disposition relative des dents 136N, 136A, 136B et 136C est semblable à la disposition relative des orifices 234N, 234A, 234B et 234C.

Ainsi, l'on trouve successivement, de la gauche vers la droite, les dents 136B, 136A, 136N et 136C, l'écart entre deux dents consécutives selon une direction longitudinale étant d'un demi module.

La dent 136N est celle qui est le plus en arrière. La dent 136C est disposée en avant de la dent 136N et en arrière de la dent 136B. L'écart suivant une direction transversale entre la dent 136C et la dent 136N est de l'ordre de 9,2 mm tandis que l'écart entre la dent 136C et la dent 136B suivant une direction transversale est de l'ordre de 6,9 mm.

La dent 136A est celle qui est située le plus en avant. L'écart suivant une direction transversale entre la dent 136A et la dent 136B est de l'ordre de 6,9 mm.

La barre conductrice à laquelle appartiennent les dents 136N et 140N ainsi que la barre conductrice à laquelle appartiennent les dents 136C et 138C sont identiques respectivement à la barre conductrice de neutre et à la barre conductrice 46C du peigne 14.

La barre conductrice à laquelle appartiennent les dents 136B et 138B est identique à la barre conductrice 46B si ce n'est que la distance entre la dent 136B et la dent 138B la plus proche est plus grande que le pas des dents de la rangée 137 (cette distance est de trois modules et demi). La barre conductrice à laquelle appartiennent les dents 136A et 138A est identique à la barre conductrice 46A si ce n'est que la distance entre la dent 136A et la dent 138A la plus proche est de deux modules, ce qui est plus petit que le pas des dents de la rangée 137.

On notera que si l'extrémité de gauche de l'enveloppe 45 du peigne 14 est relativement droite, celle de l'enveloppe 45 du peigne 114 est en forme de marche d'escalier.

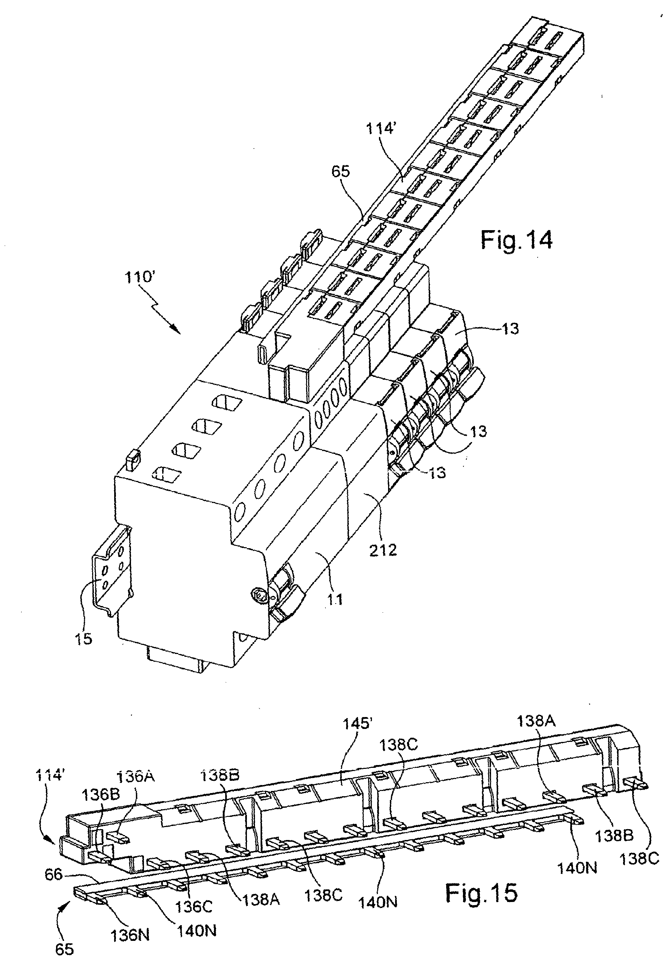

L'ensemble 110' illustré sur la figure 14 est identique à l'ensemble 110, si ce n'est que le peigne tétrapolaire 114 est remplacé par un peigne unipolaire 65, pour le pôle de neutre, et par un peigne tripolaire 114', pour les pôles de phase.

On a gardé pour les dents des peignes 114' et 65 les mêmes références numériques que pour les dents similaires du peigne 114.

La barre conductrice du peigne 65 est identique à la barre conductrice du peigne 114 à laquelle appartiennent les dents 136N et 140N.

Sur la longrine de cette barre conductrice est engagée une enveloppe isolante 66 à section en U ouverte du côté des dents 136N et 140N.

Les trois barres conductrices que comporte le peigne 114' sont identiques aux barres conductrices que comporte le peigne 114, l'enveloppe 145 étant remplacée par une enveloppe 145' qui ne renferme que ces trois barres conductrices.

On notera que sur la figure 15 les extrémités de gauche du peigne 114' et du peigne 65 sont alignées, alors qu'en position d'utilisation de ces peignes ces extrémités sont décalées, ainsi que le montre la figure 14.

Dans une variante non illustrée, le peigne 14 est également remplacé par un peigne unipolaire de neutre tel que le peigne 65 et par un peigne tripolaire de phases tel que le peigne 114' , mais avec bien entendu les dents d'extrémité de gauche de ce peigne disposées comme les dents 36A, 36B et 36C.

Comme indiqué ci-dessus, la disposition des orifices 34N et 34C (respectivement 134N et 134C ainsi que 234N et 234C) vis-à-vis de la face principale de droite du corps 25 (respectivement du corps 125 et du corps 225) est identique à la disposition des deux orifices ménagés dans la face supérieure des disjoncteurs 13 vis-à-vis de la face principale de droite de ces appareils.

Il est ainsi possible de disposer un peigne unipolaire, semblable au peigne 65, avec une dent d'extrémité engagée dans l'orifice 34C (respectivement 134C et 234C) et chacune des autres dents engagée dans l'orifice donnant accès à la borne d'entrée de phase de chacun des disjoncteurs 13.

Cela permet, par exemple dans l'attente de la transformation par le fournisseur d'énergie électrique d'un raccordement au réseau en monophasé par un raccordement en triphasé, d'alimenter de façon provisoire l'installation en monophasé.

Dans une variante non illustrée, les disjoncteurs 13 sont remplacés par d'autres types d'appareils électriques modulaires, par exemple des coupe-circuits bipolaires à fusible, munis de bornes à insertion ou de bornes à vis conventionnelles.

Dans une autre variante non illustrée, l'appareil électrique dont la face supérieure présente des orifices d'accès à des bornes prévues pour recevoir les dents d'extrémité du peigne ne remplit pas la fonction d'adaptateur de raccordement, c'est-à-dire qu'il ne comporte pas de semelle telle que 26, 126 ou 226, par exemple un interrupteur différentiel d'une largeur de cinq modules combinant en un seul bloc un interrupteur tel que 11 et un corps de raccordement par peigne tel que 25 ou alors ayant une largeur de six modules et combinant un interrupteur tel que 11 et un corps tel que 225.

Dans d'autres variantes non représentées, les dents d'extrémité du peigne sont disposées différemment, par exemple comme dans le peigne 114 mais avec les dents telles que 136A et 136B qui sont alignées avec la rangée de dents de phase 137 ; ou disposées comme dans les peignes 14 et 114 mais avec les dents d'extrémité telles que 36C ou 136C qui ne sont pas alignées avec les dents de phase.

Dans d'autres variantes non représentées, les dents d'extrémité du peigne sont à droite plutôt qu'à gauche et le décalage des dents de neutre par rapport aux dents de phase se fait vers la droite plutôt que vers la gauche.

De nombreuses autres variantes sont possibles en fonction des circonstances, et on rappelle à cet égard que l'invention ne se limite pas aux exemples décrits et représentés.

## Revendications

1. Peigne multipolaire de répartition horizontale d'une énergie électrique polyphasée, comportant une pluralité de dents de même orientation chacune adaptée à être insérée dans une borne de raccordement d'un appareil électrique (12, 13, 112, 212), lesdites dents comportant une rangée (37 ; 137) de dents de phase (38A, 38B, 38C ; 138A, 138B, 138C) alignées longitudinalement suivant un pas (p) constant, deux dents consécutives de ladite rangée (37 ; 137) étant prévues pour un pôle de phase respectif et appartenant donc à une barre conductrice de phase (46A, 46B, 46C) respective, les dents de ladite rangée (37 ; 137) qui appartiennent à une même barre conductrice (46A, 46B, 46C) étant disposées suivant un pas (q) multiple du pas (p) de ladite rangée (37 ; 137) ; **caractérisé en ce que** lesdites dents comportent, en outre de ladite rangée (37 ; 137) de dents de phase, à une extrémité dudit peigne (14 ; 114 ; 114'), un couple de dents de phase d'extrémité (36A - 36B, 36B - 36C ; 136A - 136B) présentant entre elles un écart (e) suivant une direction longitudinale qui est plus petit que le pas (p) de ladite rangée (37 ; 137) de dents de phase alors que chaque dent dudit couple de dents de phase d'extrémité (36A - 36B, 36B - 36C ; 136A - 136B) appartient à une respective desdites barres conductrice de phase (46A, 46B, 46C).

2. Peigne selon la revendication 1, **caractérisé en ce que** ledit écart (e) suivant une direction longitudinale est de la moitié dudit pas (p) de ladite rangée (37 ; 137) de dents de phase.

3. Peigne selon la revendication 2, **caractérisé en ce que** ledit pas (p) est compris entre 17,8 et 18 mm.

4. Peigne selon l'une quelconque des revendications 1 à 3, **caractérisé en ce qu'**au moins une dent (36A, 36B ; 136A, 136B) dudit couple de dents de phase d'extrémité (36A - 36B, 36B - 36C ; 136A - 136B) est décalée transversalement par rapport à ladite rangée (37; 137) de dents de phase (38A, 38B, 38C ; 138A, 138B, 138C).

5. Peigne selon l'une quelconque des revendications 1 à 4, **caractérisé en ce que** les deux dents dudit couple de dents de phase d'extrémité (36A - 36B ; 136A - 136B) sont chacune décalées transversalement par rapport à ladite rangée (37; 137) de dents de phase (38A, 38B, 38C; 138A, 138B, 138C).

6. Peigne selon l'une quelconque des revendications 1 à 5, **caractérisé en ce que** lesdites dents comportent, en outre de ladite rangée (37 ; 137) de dents de phase, à une extrémité dudit peigne (14 ; 114 ; 114'), trois dents de phase d'extrémité (36A, 36B, 36C; 136A, 136B, 136C) appartenant chacune à une respective desdites barres conductrices de phase (46A, 46B, 46C), une première (36A ; 136A) et une deuxième (36B ; 136B) desdites dents de phase d'extrémité formant un dit couple de dents de phase d'extrémité.

7. Peigne selon la revendication 6, **caractérisé en ce qu'**une troisième (36C ; 136C) desdites dents de phase d'extrémité est alignée avec ladite rangée (37 ; 137) de dents de phase.

8. Peigne selon l'une quelconque des revendications 6 ou 7, **caractérisé en ce que** ladite première dent de phase d'extrémité (36A ; 136A) est celle qui est située le plus en avant, ladite deuxième dent de phase d'extrémité (36B ; 136B) étant située en arrière de ladite première dent de phase d'extrémité, la troisième dent de phase d'extrémité (36C ; 136C) étant située en arrière de ladite deuxième dent de phase d'extrémité (36B ; 136B).

9. Peigne selon la revendication 8, **caractérisé en ce que** chaque dite barre conductrice (46A, 46B, 46C) comporte une longrine (47) en forme de bande continue d'où saillent les dents appartenant à cette barre, avec pour chaque dite barre conductrice (46A, 46B, 46C) ladite dent de phase d'extrémité (36A, 36B, 36C ; 136A, 136B, 136C) qui est disposée dans le même plan que ladite longrine (47).

10. Peigne selon l'une quelconque des revendications 8 ou 9, **caractérisé en ce que** l'écart suivant une direction transversale entre ladite première dent de phase d'extrémité (36A; 136A) et ladite deuxième dent de phase d'extrémité (36B ; 136B) est ie même que l'écart suivant une direction transversale entre ladite deuxième dent de phase d'extrémité (36B ; 136B) et ladite troisième dent de phase d'extrémité (36C ; 136C).

11. Peigne selon la revendication 10, **caractérisé en ce que** ledit écart suivant une direction transversale est compris entre 6,7 et 7,1 mm.

12. Peigne selon l'une quelconque des revendications 6 à 11, **caractérisé en ce que** ladite deuxième dent de phase d'extrémité (36B) et une troisième dent de phase d'extrémité (36C) forment également un dit couple de dent de phase d'extrémité.

13. Peigne selon la revendication 12, **caractérisé en ce que** ladite première dent de phase d'extrémité (36A) et ladite troisième dent de phase d'extrémité (36C) sont alignées l'une avec l'autre suivant une direction transversale.

14. Peigne selon la revendication 13, **caractérisé en ce que** ladite deuxième dent de phase d'extrémité (36B) est disposée à gauche desdites première dent de phase d'extrémité (36A) et troisième dent de phase d'extrémité (36C).

15. Peigne selon l'une quelconque des revendications 13 ou 14, **caractérisé en ce que** lesdites dents comportent en outre une rangée (39) de dents de neutre (40N), alignées longitudinalement selon le même pas (p) que ladite rangée (37) de dents de phase, ainsi qu'une dent de neutre d'extrémité (36N) alignée avec ladite rangée de dents de neutre (39), appartenant à une même barre conductrice de neutre, distincte desdites barres conductrices (46A, 46B, 46C) de phase, ladite dent de neutre d'extrémité (36N) et ladite deuxième dent de phase d'extrémité (36B) étant alignées suivant une direction transversale.

16. Peigne selon l'une quelconque des revendications 6 à 11, **caractérisé en ce que** ladite deuxième dent de phase d'extrémité (136B) et une troisième dent de phase d'extrémité (136C) présentent entre elles un écart suivant une direction longitudinale qui est plus grand que le pas (p) de ladite rangée (137) de dents de phase.

17. Peigne selon la revendication 16, **caractérisé en ce que** ladite deuxième dent de phase d'extrémité (136B) est disposée à gauche de ladite première dent de phase d'extrémité (136A) tandis que ladite troisième dent de phase d'extrémité (136C) est disposée à droite de ladite première dent de phase d'extrémité (136A).

18. Peigne selon la revendication 17, **caractérisé en ce que** lesdites dents comportent en outre une rangée (139) de dents de neutre (140N), alignées longitudinalement selon le même pas (p) que ladite rangée (137) de dents de phase, ainsi qu'une dent de phase d'extrémité (136N) alignée avec ladite rangée de dents de neutre (139N) appartenant à une même barre conductrice de neutre distincte desdites barres conductrices de phase, ladite dent de neutre d'extrémité (136N) étant située à gauche de ladite troisième dent de phase d'extrémité (136C) et à droite de la première dent de phase d'extrémité (136A).

19. Peigne selon l'une quelconque des revendications 1 à 18, **caractérisé en ce qu'**il comporte une enveloppe (45 ; 145 ; 145') en matière isolante renfermant lesdites barres conductrice (46A, 46B, 46C), à l'exception desdites dents, qui saillent d'une surface inférieure (50) de ladite enveloppe.

20. Peigne selon la revendication 19, **caractérisé en ce que** ladite face inférieure (50) de ladite enveloppe (45 ; 145 ; 145') est plate et présente au moins un renfoncement (51 ; 151) débouchant sur une face avant (52) de ladite enveloppe, chaque dit renfoncement (51 ; 151) ayant un contour globalement parallélépipédique adapté à accueillir une lame plate de tournevis.

21. Ensemble **caractérisé en ce qu'**il comporte un peigne (14 ; 114 ; 114') selon l'une quelconque des la revendications 1 à 20 et un appareil électrique (12 ; 112 ; 212) comportant une face (33 ; 133 ; 233) présentant un couple d'orifices de phase (34A - 34B, 34B - 34C ; 134A - 134B) donnant chacun accès à une borne de raccordement (35) d'un pôle de phase respectif et étant chacun adapté à recevoir une dent respective dudit couple de dents de phase d'extrémité (36A - 36B, 36B - 36C ; 136A - 136B) dudit peigne (14 ; 114 ; 114') disposé suivant une direction droite-gauche dudit appareil, lesdits orifices (34 - 34B, 34B - 34C ; 134A - 134B) dudit couple d'orifices de phase ayant donc entre eux un écart (e) suivant une direction droite-gauche qui est plus petit que ledit pas (p) de la rangée (37 ; 137) de dents de phase dudit peigne.

22. Ensemble selon la revendication 21, **caractérisé en ce que** ledit appareil électrique (12 ; 112 ; 212) comporte un corps (25 ; 125 ; 225) au format modulaire et une semelle (26 ; 126 ; 226) s'allongeant suivant une direction gauche-droite, saillant dudit corps (25 ; 125 ; 225) au-delà d'une face principale (27 ; 127 ; 227) de celui-ci et saillant légèrement vers le bas au-delà d'une face inférieure dudit corps (25 ; 125 ; 225), ladite semelle présentant des dents (30A, 30B, 30C, 30N ; 130A, 130B, 130C, 130N ; 230A, 230B, 230C, 230N) saillant verticalement au-dessus d'une face supérieure (31) de ladite semelle.

23. Ensemble selon la revendication 22, **caractérisé en ce que** lesdites dents (30A, 30B, 30C, 30N ; 130A, 130B, 130C, 130N ; 230A, 230B, 230C, 230N) sont alignées longitudinalement suivant le même pas (p) que celui de ladite rangée (37 ; 137) de dents de phase dudit peigne (14 ; 114 ; 114').

24. Ensemble selon la revendication 23, **caractérisé en ce que** ladite semelle (26 ; 126 ; 226) présente une longueur suivant une direction gauche-droite égale à quatre fois ledit pas (p) de ladite rangée (37 ; 137) de dents de phase.

25. Ensemble selon l'une quelconque des revendications 23 ou 24, **caractérisé en ce que** ladite face dudit appareil présentant un couple d'orifices de phase est la face supérieure (33 ; 133 ; 233) dudit corps (25 ; 125 ; 225).

26. Ensemble selon la revendication 25, **caractérisé en ce que** ladite face supérieure (33 ; 133 ; 233) dudit corps (25 ; 125 ; 225) présente autant d'orifices (34A, 34B, 34C, 34N ; 134A, 134B, 134C, 134N ;234A, 234B, 234C, 234N) donnant accès à une borne de raccordement, que de dents (30A, 30B, 30C, 30N; 130A, 130B, 130C, 130N; 230A, 230B, 230C, 230N) saillant de ladite semelle (26 ; 126 ; 226), chaque dite dent étant raccordée électriquement à une respective desdites bornes par des conducteurs électriques (55A, 55B, 55C, 55N) internes audit appareil.

27. Ensemble selon la revendication 26, **caractérisé en ce que** lesdites bornes de raccordement auxquelles donnent accès lesdits orifices (34A, 34B, 34C, 34N ; 134A, 134B, 134C, 134N) sont des bornes à insertion (35).

28. Ensemble selon la revendication 27, **caractérisé en ce que** ledit appareil est un simple adaptateur (12) de raccordement par peigne, la largeur suivant une direction gauche-droite dudit corps (25) étant égale au pas (p) de ladite rangée (37 ; 137) de dents de phase.

29. Ensemble selon la revendication 27, **caractérisé en ce que** ledit corps (125) dudit appareil renferme un déclencheur différentiel triphasé, la largeur suivant une direction gauche-droite dudit corps (125) étant égale à quatre fois le pas (p) de ladite rangée (37 ; 137) de dents de phase.

30. Ensemble selon la revendication 27, **caractérisé en ce que** ledit corps (125) dudit appareil renferme un déclencheur différentiel triphasé, la largeur suivant une direction gauche-droite dudit corps (125) étant égale à trois fois le pas (p) de ladite rangée (37 ; 137) de dents de phase.

31. Ensemble selon la revendication 26, **caractérisé en ce que** lesdites bornes de raccordement auxquelles donnent accès lesdits orifices (234A, 234B, 234C, 234N) sont des bornes à vis.

32. Ensemble selon la revendication 31, **caractérisé en ce que** ledit appareil est un simple adaptateur (212) de raccordement par peigne, la largeur suivant une direction gauche-droite dudit corps (225) étant égale à deux fois le pas (p) de ladite rangée (37 ; 137) de dents de phase.

## Claims

1. A multipolar comb for horizontal distribution of polyphase electrical energy comprising a plurality of teeth involving the same orientation and each adapted to be inserted into a connecting terminal of an electrical apparatus (12, 13, 112, 212), said teeth comprising a row (37; 137) of phase teeth (38A, 38B, 38C; 138A, 138B, 138C) which are aligned longitudinally at a constant pitch (p), two consecutive teeth of said row (37; 137) being provided for a respective phase pole and thus belonging to a respective phase conducting bar (46A, 46B, 46C), the teeth of said row (37; 137) which belong to the same conducting bar (46A, 46B, 46C) being disposed at a multiple pitch (q) of the pitch (p) of said row (37; 137), **characterised in that** in addition to said row (37; 137) of phase teeth at an end of said comb (13; 114; 114'), said teeth comprise a pair of end phase teeth (36A-36B, 36B-36C; 136A-136B) having between them a spacing (e) in a longitudinal direction which is smaller than the pitch (p) of said row (37; 137) of phase teeth while each tooth of said pair of end phase teeth (36A-36B, 36B-36C; 136A-136B) belongs to a respective one of said phase conducting bars (46A, 46B, 46C).

2. A comb according to claim 1 **characterised in that** said spacing (e) in a longitudinal direction is half said pitch (p) of said row (37; 137) of phase teeth.

3. A comb according to claim 2 **characterised in that** said pitch (p) is between 17.8 and 18 mm.

4. A comb according to any one of claims 1 to 3 **characterised in that** at least one tooth (36A, 36B; 136A, 136B) of said pair of end phase teeth (36A-36B; 36B-36C; 136A-136B) is displaced transversely with respect to said row (37; 137) of phase teeth (38A, 38B, 38C; 138A, 138B, 138C).

5. A comb according to any one of claims 1 to 4 **characterised in that** the two teeth of said pair of end phase teeth (36A-36B, 36B-36C; 136A-136B) are each displaced transversely with respect to said row (37; 137) of phase teeth (38A, 38B, 38C; 138A, 138B, 138C).

6. A comb according to any one of claims 1 to 5 **characterised in that**, besides said row (37; 137) of phase teeth at an end of said comb (14; 114; 114') said teeth comprise three end phase teeth (36A, 36B, 36C; 136A, 136B, 136C) each belonging to a respective one of said phase conducting bars (46A, 46B, 46C), a first (36A; 136A) and a second (36B; 136B) of said end phase teeth forming a said pair of end phase teeth.

7. A comb according to claim 6 **characterised in that** a third (36C; 136C) of said end phase teeth is aligned with said row (37; 137) of phase teeth.

8. A comb according to either one of claims 6 and 7 **characterised in that** said first end phase tooth (36A; 136A) is that which is disposed most forwardly, said second end phase tooth (36B; 136B) being disposed rearwardly of said first end phase tooth, and the third end phase tooth (36C; 136C) being disposed rearwardly of said second end phase tooth (36B; 136B).

9. A comb according to claim 6 **characterised in that** each said conducting bar (46A, 46B, 46C) comprises a longitudinal bar portion (47) in the form of a continuous strip from which the teeth belonging to said bar project, with for each said conducting bar (46A, 46B, 46C) said end phase tooth (36A, 36B, 36C; 136A, 136B, 136C) which is disposed in the same plane as said longitudinal bar portion (47).

10. A comb according to either one of claims 8 and 9 **characterised in that** the spacing in a transverse direction between said first end phase tooth (36A; 136A) and said second end phase tooth (36B; 136B) is the same as the spacing in a transverse direction between said second end phase tooth (36B; 136B) and said third end phase tooth (36C; 136C).

11. A comb according to claim 10 **characterised in that** said spacing in a transverse direction is between 6.7 and 7.1 mm.

12. A comb according to any one of claims 6 to 11 **characterised in that** said second end phase tooth (36B) and a third end phase tooth (36C) also form a said pair of end phase teeth.

13. A comb according to claim 12 **characterised in that** said first end phase tooth (36A) and said third end phase tooth (36C) are aligned with each other in a transverse direction.

14. A comb according to claim 13 **characterised in that** said second end phase tooth (36B) is disposed to the left of said first end phase tooth (36A) and said third end phase tooth (36C).

15. A comb according to either one of claims 13 and 14 **characterised in that** said teeth further comprise a row (39) of neutral teeth (40N) aligned longitudinally at the same pitch (p) as said row (37) of phase teeth, and an end neutral tooth (36N) aligned with said row of neutral teeth (39), belonging to the same neutral conducting bar which is separate from said phase conducting bars (46A, 46B, 46C), said end neutral tooth (36N) and said second end phase tooth (36B) being aligned in a transverse direction.

16. A comb according to any one of claims 6 to 11 **characterised in that** said second end phase tooth (136B) and a third end phase tooth (136C) are at a mutual spacing in a longitudinal direction which is greater than the pitch (p) of said row (137) of phase teeth.

17. A comb according to claim 16 **characterised in that** said second end phase tooth (136B) is disposed to the left of said first end phase tooth (136A) while said third end phase tooth (136C) is disposed to the right of said first end phase tooth (136A).

18. A comb according to claim 17 **characterised in that** said teeth further comprise a row (139) of neutral teeth (140N) aligned longitudinally at the same pitch (p) as said row (137) of phase teeth, and an end neutral tooth (136N) aligned with said row of neutral teeth (139), belonging to the same neutral conducting bar which is separate from said phase conducting bars, said end neutral tooth (136N) being disposed to the left of said third end phase tooth (136C) and to the right of the first end phase tooth (136A).

19. A comb according to any one of claims 1 to 18 **characterised in that** it comprises a casing (45; 145; 145') of insulating material enclosing said conducting bars (46A, 46B, 46C) except for said teeth which project from a lower surface (50) of said casing.

20. A comb according to claim 19 **characterised in that** said lower face (50) of said casing (45; 145; 145') is flat and has at least one recess (51; 151) opening on to a front face (52) of said casing, each said recess (51; 151) being of a generally parallelepipedic contour adapted to receive a flat screwdriver blade.

21. An assembly **characterised in that** it comprises a comb (14; 114; 114') according to any one of claims 1 to 20 and an electrical apparatus (12; 112; 212) comprising a face (33; 133; 233) having a pair of phase orifices (34A-34B, 34B-34C; 134A-134B) each providing access to a connecting terminal (35) of a respective phase pole and each being adapted to receive a respective tooth of said pair of end phase teeth (36A-36B, 36B-36C; 136A-136B) of said comb (14; 114; 114') disposed in a right-to-left direction of said apparatus, said orifices (34A-34B, 34B-34C; 134A-134B) of said pair of phase orifices therefore having between them a spacing (e) in a right-to-left direction which is smaller than said pitch (p) of the row (37; 137) of phase teeth of said comb.

22. An assembly according to claim 21 **characterised in that** said electrical apparatus (12; 112; 212) comprises a body (25; 125; 225) of modular format and a base plate portion (26; 126; 226) which is elongate in a left-to-right direction projecting from said body (25; 125; 225) beyond a main face (27; 127; 227) thereof and projecting slightly downwardly beyond a lower face of said body (25; 125; 225), said base plate portion having teeth (30A, 30B, 30C, 30N; 130A, 130B, 130C, 130N; 230A, 230B, 230C, 230N) projecting vertically above an upper face (31) of said base plate portion.

23. An assembly according to claim 22 **characterised in that** said teeth (30A, 30B, 30C, 30N; 130A, 130B, 130C, 130N; 230A, 230B, 230C, 230N) are aligned longitudinally at the same pitch (p) as that of said row (37; 137) of phase teeth of said comb (14; 114; 114').

24. An assembly according to claim 23 **characterised in that** said base plate portion (26; 126; 226) is of a length in a left-to-right direction equal to four times said pitch (p) of said row (37; 137) of phase teeth.

25. An assembly according to either one of claims 23 and 24 **characterised in that** said face of said apparatus having a pair of phase orifices is the upper face (33; 133; 233) of said body (25; 125; 225).

26. An assembly according to claim 25 **characterised in that** said upper face (33; 133; 233) of said body (25; 125; 225) has as many orifices (34A, 34B, 34C, 34N; 134A, 134B, 134C, 134N; 234A, 234B, 234C, 234N) giving access to a connecting terminal as teeth (30A, 30B, 30C, 30N; 130A, 130B, 130C, 130N; 230A, 230B, 230C, 230N) projecting from said base plate portion (26; 126; 226), each said tooth being electrically connected to a respective one of said terminals by electrical conductors (55A, 55B, 55C, 55N) internal to said apparatus.

27. An assembly according to claim 26 **characterised in that** said connecting terminals to which said orifices (34A, 34B, 34C, 34N; 134A, 134B, 134C, 134N) give access are insertion terminals (35).

28. An assembly according to claim 27 **characterised in that** said apparatus is a simple adaptor (12) for connection by a comb, the width in a left-to-right direction of said body (25) being equal to the pitch (p) of said row (37; 137) of phase teeth.

29. An assembly according to claim 27 **characterised in that** said body (125) of said apparatus contains a three-phase differential tripping device, the width in a left-to-right direction of said body (125) being equal to four times the pitch (p) of said row (37; 137) of phase teeth.

30. An assembly according to claim 27 **characterised in that** said body (125) of said apparatus contains a three-phase differential tripping device, the width in a left-to-right direction of said body (125) being equal to three times the pitch (p) of said row (37; 137) of phase teeth.

31. An assembly according to claim 26 **characterised in that** said connecting terminals to which said orifices (234A, 234B, 234C, 234N) give access are screw terminals.

32. An assembly according to claim 31 **characterised in that** said apparatus is a simple adaptor (212) for connection by a comb, the width in a left-to-right direction of said body (225) being equal to twice the pitch (p) of said row (37; 137) of phase teeth.

## Patentansprüche

1. Multipolarer Kamm zur horizontalen Verteilung einer mehrphasigen elektrischen Energie, mit einer Vielzahl von Zähnen mit gleicher Ausrichtung, die jeweils in eine Anschlussklemme eines elektrischen Geräts (12, 13, 112, 212) eingeführt zu werden vermögen, wobei die Zähne eine Reihe (37; 137) Phasenzähne (38A, 38B, 38C; 138A, 138B, 138C) umfassen, die mit einer gleichmäßigen Teilung (p) längs aneinandergereiht sind, wobei zwei aufeinanderfolgende Zähne der Reihe (37; 137) für einen entsprechenden Phasenpol vorgesehen sind und somit einer entsprechenden Phasensammelschiene (46, 46B, 46C) zugehörig sind, wobei die Zähne der Reihe (37; 137), die ein und derselben Sammelschiene (46A, 46B, 46C) zugehörig sind, mit einer mehrfachen Teilung (q) der Teilung (p) der Reihe (37; 137) angeordnet sind,
**dadurch gekennzeichnet, dass** die Zähne zusätzlich zu der Phasenzähnereihe (37; 137) an einem Ende des Kamms (14; 114; 114') ein Paar äußere Phasenzähne (36A-36B, 36B-36C; 136A-136B) umfassen, die in Längsrichtung zwischen einander einen Abstand (e) aufweisen, der kleiner ist als die Teilung (p) der Phasenzähnereihe (37; 137), während jeder Zahn des äußeren Phasenzähnepaars (36A-36B, 36B-36C; 136A-136B) einer entsprechenden Phasensammelschienen (46A, 46B, 46C) zugehörig ist.

2. Kamm nach Anspruch 1,
**dadurch gekennzeichnet, dass** der Abstand (e) in einer Längsrichtung halb so groß ist wie die Teilung (p) der Phasenzähnereihe (37; 137).

3. Kamm nach Anspruch 2,
**dadurch gekennzeichnet, dass** die Teilung (p) zwischen 17,8 und 18 mm beträgt.

4. Kamm nach der Ansprüche 1 bis 3,
**dadurch gekennzeichnet, dass** wenigstens ein Zahn (26A, 36B; 136A, 136B) des äußeren Phasenzähnepaars (36A-36B, 36B-36C; 136A-136B) in Bezug auf die Reihe (37; 137) Phasenzähne (38A, 38B, 38C; 138B, 138C) quer versetzt ist.

5. Kamm nach einem der Ansprüche 1 bis 4,
**dadurch gekennzeichnet, dass** die beiden Zähne des äußerer Phasenzähnepaars (36A-36B; 136A-136B) jeweils in Bezug auf die Reihe (37; 137) Phasenzähne (38A, 38B, 38C; 138A, 138B, 138C) quer versetzt sind.

6. Kamm nach einem der Ansprüche 1 bis 5,
**dadurch gekennzeichnet, dass** die Zähne zusätzlich zu der Phasenzähnereihe (37; 137) an einem Ende des Kamms (14; 114; 114') drei äußere Phasenzähne (36A, 36B, 36C; 136A, 136C) umfassen, die jeweils einer der entsprechenden Phasensammelschienen (46C, 46B, 46C) zugehörig sind, wobei ein erster (36A; 136A) und ein zweiter (36B; 136B) äußerer Phasenzahn ein äußeres Phasenzähnepaar bilden.

7. Kamm nach Anspruch 6,
**dadurch gekennzeichnet, dass** ein dritter (36C; 136C) äußerer Phasenzahn mit der Phasenzähnereihe (37; 137) in einer Reihe angeordnet ist.

8. Kamm nach einem der Ansprüche 6 oder 7,
**dadurch gekennzeichnet, dass** der erste äußere Phasenzahn (36A; 136A) derjenige ist, der am weitesten vorne angeordnet ist, wobei der zweite äußere Phasenzahn (36B; 136B) hinter dem ersten äußeren Phasenzahn angeordnet ist, wobei der dritte äußere Phasenzahn (36C; 136C) hinter dem zweiten äußeren Phasenzahn (36B; 136B) angeordnet ist.

9. Kamm nach Anspruch 8,
**dadurch gekennzeichnet, dass** jede Sammelschiene (46A, 46B, 46C) einen Längsträger (47) in Form eines kontinuierlichen Bandes umfasst, von wo die dieser Schiene zugehörigen Zähne vorstehen, wobei bei jeder Sammelschiene (46A, 46B, 46C) der äußere Phasenzahn (36A, 36B, 36C; 136A, 136B, 136C) in derselben Ebene wie der Längsträger (47) angeordnet ist.

10. Kamm nach einem der Ansprüche 8 oder 9,
**dadurch gekennzeichnet, dass** der Abstand in einer Querrichtung zwischen dem ersten äußeren Phasenzahn (36A; 136A) und dem zweiten äußeren Phasenzahn (36B; 136B) genauso groß ist wie die Teilung in einer Querrichtung zwischen dem zweiten äußeren Phasenzahn (36B; 136B) und dem dritten äußeren Phasenzahn (36C; 136C).

11. Kamm nach Anspruch 10,
**dadurch gekennzeichnet, dass** der Abstand in einer Querrichtung zischen 6,7 und 7,1 mm beträgt.

12. Kamm nach einem der Ansprüche 6 bis 11,
**dadurch gekennzeichnet, dass** der zweite äußere Phasenzahn (36B) und ein dritter äußerer Phasenzahn (36C) ebenfalls ein äußeres Phasenzähnepaar bilden.

13. Kamm nach Anspruch 12,
**dadurch gekennzeichnet, dass** der erste äußere Phasenzahn (36A) und der dritte äußere Phasenzahn (36C) in einer Querrichtung in einer Reihe angeordnet sind.

14. Kamm nach Anspruch 13,
**dadurch gekennzeichnet, dass** der zweite äußere Phasenzahn (36B) links von dem ersten äußeren Phasenzahn (36A) und dem dritten äußeren Phasenzahn (36C) angeordnet ist.

15. Kamm nach einem der Ansprüche 13 oder 14,
**dadurch gekennzeichnet, dass** die Zähne zudem eine Reihe (39) Neutralleiterzähne (40N), die mit derselben Teilung (p) wie die Phasenzähnereihe (37) längs aneinandergereiht sind, sowie einen äußeren Neutralleiterzahn (36N), der mit der Neutralleiterzähnereihe (39) in einer Reihe angeordnet ist, umfassen, die ein und derselben von der Phasensammelschiene (46A, 46B, 46C) getrennten Neutralleitersammelschiene zugehörig sind, wobei der äußere Neutralleiterzahn (36N) und der zweite äußere Phasenzahn (36B) in einer Querrichtung in einer Reihe angeordnet sind.

16. Kamm nach einem der Ansprüche 6 bis 11,
**dadurch gekennzeichnet, dass** der zweite äußere Phasenzahn (136B) und ein dritter äußerer Phasenzahn (136C) in Längsrichtung zwischen einander einen Abstand aufweisen, der größer ist als die Teilung (p) der Phasenzähnereihe (137).

17. Kamm nach Anspruch 16,
**dadurch gekennzeichnet, dass** der zweite äußere Phasenzahn (136B) links von dem ersten äußeren Phasenzahn (136A) angeordnet ist, während der dritte äußere Phasenzahn (136C) rechts von dem ersten äußeren Phasenzahn (136A) angeordnet ist.

18. Kamm nach Anspruch 17,
**dadurch gekennzeichnet, dass** die Zähne zudem eine Reihe (139) Neutralleiterzähne (140N), die mit derselben Teilung (p) wie die Phasenzähnereihe (138) längs aneinandergereiht sind, sowie einen äußeren Phasenzahn (136N), der mit der Neutralleiterzähnereihe (139N) in einer Reihe angeordnet ist, umfassen, die ein und derselben von den Phasensammelschienen getrennten Neutralleitersammelschiene zugehörig sind, wobei der äußere Neutralleiterzahn (136N) links von dem dritten äußeren Phasenzahn (136C) und rechts von dem ersten äußeren Phasenzahn (136A) angeordnet ist.

19. Kamm nach einem der Ansprüche 1 bis 18,
**dadurch gekennzeichnet, dass** er eine Ummantelung (45; 145; 145') aus Isoliermaterial umfasst, welche die Sammelschienen (46A, 46B, 46C) umschließt, mit Ausnahme der Zähne, die an einer Unterseite (50) der Ummantelung vorstehen.

20. Kamm nach Anspruch 19,
**dadurch gekennzeichnet, dass** die Unterseite (50) der Ummantelung (45; 145; 145') eben ist und wenigstens einen Rücksprung (51; 151) aufweist, der an einer Vorderseite (52) der Ummantelung mündet, wobei jeder Rücksprung (51; 151) einen allgemein parallelepipedischen Umfang hat, der die flache Klinge eines Schraubendrehers aufzunehmen vermag.

21. Einheit,
**dadurch gekennzeichnet, dass** sie einen Kamm (14; 114, 114') nach einem der Ansprüche 1 bis 20 und ein elektrisches Gerät (12; 112; 212) umfasst, das eine Seite (33; 133; 233) aufweist, die mit einem Paar Phasenöffnungen (34A-34B, 34B-34C; 134A-134B) versehen ist, die jeweils eine Anschlussklemme (35) eines entsprechenden Phasenpols zugänglich machen und jeweils einen entsprechenden Zahn des äußeren Phasenzähnepaars (36A-36B, 36B-36C; 136A-136B) des Kamms (14; 114; 114') aufzunehmen vermögen, der in einer Rechts-Links-Richtung des Geräts angeordnet ist, wobei die Öffnungen (34A-34B, 34B-34C; 134A-134B) des Phasenöffnungspaars somit in einer Richtung von rechts nach links zwischen einander einen Abstand (e) haben, der kleiner ist als die Teilung (p) der Phasenzähnereihe (37; 137) des Kamms.

22. Einheit nach Anspruch 21,
**dadurch gekennzeichnet, dass** das elektrische Gerät (12; 112; 212) einen Korpus (25; 125; 225) in Modularform und einen Sockel (26; 126; 226) aufweist, der sich in einer Richtung von links nach rechts erstreckt und aus dem Korpus (25; 125; 225) jenseits einer Hauptseite (27; 127; 227) von diesem vorsteht und jenseits einer Unterseite des Korpus (25; 125; 225) leicht nach unten übersteht, wobei der Sockel Zähne (30A, 30B, 30C, 30N; 130A, 130B, 130C, 130N; 230A, 230B, 230C, 230N) aufweist, die über einer Oberseite (31) des Sockels senkrecht vorstehen.

23. Einheit nach Anspruch 22,
**dadurch gekennzeichnet, dass** die Zähne (30A, 30B, 30C, 30N; 130A, 130B, 130C, 130N; 230A, 230B, 230C, 230N) mit derselben Teilung (p) wie die der Phasenzähnereihe (37; 137) des Kamms (14; 114; 114') längs aneinadergereiht sind.

24. Einheit nach Anspruch 23,
**dadurch gekennzeichnet, dass** der Sockel (26; 126; 226) in einer Richtung von links nach rechts eine Länge aufweist, die viermal der Teilung (p) der Phasenzähnereihe (37; 137) entspricht.

25. Einheit nach einem der Ansprüche 23 oder 24,
**dadurch gekennzeichnet, dass** die Seite des Geräts, die ein Phasenöffnungspaar aufweist, die Oberseite (33; 133; 233) des Korpus (25; 125; 225) ist.

26. Einheit nach Anspruch 25,
**dadurch gekennzeichnet, dass** die Oberseite (33; 133; 233) des Korpus (25; 125; 225) so viele eine Anschlussklemme zugänglich machende Öffnungen (34A, 34B, 34C, 34N; 134A, 134B, 134C, 134N; 234A, 234B, 234C, 234N) aufweist, wie Zähne (30A, 30B, 30C, 30N; 130A, 130B, 130C, 130N; 230A, 230B, 230C, 230N) vorhanden sind, die vom Sockel (26; 126; 226) vorstehen, wobei jeder dieser Zähne durch elektrische Leiter (55A, 55B, 55C, 55N) innen im Gerät elektrisch mit einer der entsprechenden Klemmen verbunden ist.

27. Einheit nach Anspruch 26,
**dadurch gekennzeichnet, dass** die Anschlussklemmen, zu denen die Öffnungen (34A, 34B, 34C, 34N; 134A, 134B, 134C, 134N) Zugang gewähren, Einsetzklemmen (35) sind.

28. Einheit nach Anspruch 27,
**dadurch gekennzeichnet, dass** das Gerät ein einfacher Kammverbindungsadapter (12) ist, wobei die Breite des Korpus (25) in einer Richtung von links nach rechts der Teilung (p) der Phasenzähnereihe (37; 137) entspricht.

29. Einheit nach Anspruch 27,
**dadurch gekennzeichnet, dass** der Korpus (125) des Geräts einen Dreiphasen-Differenzstromauslöser beinhaltet, wobei die Breite des Korpus (125) in einer Richtung von links nach rechts viermal der Teilung (p) der Phasenzähnereihe (37; 137) entspricht.

30. Einheit nach Anspruch 27,
**dadurch gekennzeichnet, dass** der Korpus (125) des Geräts einen Dreiphasen-Differenzstromauslöser beinhaltet, wobei die Breite des Korpus (125) in einer Richtung von links nach rechts dreimal der Teilung (p) der Phasenzähnereihe (37; 137) entspricht.

31. Einheit nach Anspruch 26,
**dadurch gekennzeichnet, dass** die Anschlussklemmen, zu denen die Öffnungen (234A, 234B, 234C, 234N) Zugang gewähren, Schraubklemmen sind.

32. Einheit nach Anspruch 31,
**dadurch gekennzeichnet, dass** das Gerät ein einfacher Kammverbindungsadapter (212) ist, wobei die Breite des Korpus (225) in einer Richtung von links nach rechts zweimal der Teilung (p) der Phasenzähnereihe (37; 137) entspricht.
